# FASCICULE DE BREVET EUROPEEN

(11) **EP 4 279 998 B1**
(45) Date de publication et mention de la délivrance du brevet: **07.01.2026**
(21) Numéro de dépôt: 22173607.7
(22) Date de dépôt: 16.05.2022
(51) Int. Cl.: G04B 19/04, G04B 19/10, G04D 3/00

(54) **PROCÉDÉ DE DÉCOUPAGE D'APPLIQUES POUR LE DOMAINE HORLOGER**
VERFAHREN ZUM AUSSCHNEIDEN VON APPLIKEN FÜR DIE UHRENINDUSTRIE
METHOD FOR CUTTING BRACKETS FOR THE FIELD OF CLOCKMAKING

(43) Date de publication de la demande: 22.11.2023
(73) Titulaire: Universo S.A., 2300 La Chaux-de-Fonds (CH)
(72) Inventeur: ROSSIER, Gérard, 2300 La Chaux-de-Fonds (CH)
(74) Mandataire: ICB SA

(56) Documents cités:
- CH-A2- 711 256
- US-A1- 2019 278 230
- US-B1- 6 404 704

## Description

### Domaine technique de l'invention

L'invention concerne les procédés de fabrication d'appliques pour le domaine horloger et en particulier le découpage de telles appliques. Les appliques sont en général agencées en surface de cadrans de montre, qui sont ensuite associés chacun à un affichage analogique de l'heure, pour donner du relief à la graduation horaire ou aux données horaires, par exemple des chiffres romains de I à XII.

### Arrière-plan technologique

L'homme du métier utilise en général la technique d'étampage pour découper des appliques. L'étape de découpage intervient en général avant certaines étapes de finition des appliques. Un avantage connu de l'étampage, c'est son coût relativement bas pour la production d'appliques en grand nombre. En effet, une fois l'étampe réalisée, laquelle peut être relativement onéreuse, le procédé de découpage des appliques avec l'étampe est rapide et peu onéreux. Toutefois, le découpage par étampage présente des limites de forme pour les appliques, de sorte que le découpage par étampage est bien approprié pour des formes relativement simples. En particulier, la fabrication des étampes et le procédé d'étampage ne permettent d'obtenir ni des parties très étroites, en creux ou en plein, ni des zones pointues sans un contour arrondi terminal, au niveau de la pointe, qui présente un rayon moyen ne pouvant techniquement être inférieur à une certaine valeur limite, laquelle est assez grande et dépend notamment de la hauteur de la paroi latérale de l'applique, au moment de son découpage, dans la zone du contour arrondi.

Le document CH 711 256 A2 décrit un procédé de fabrication de composants horlogers en bande, en particulier un procédé d'usinage et de découpage dans une bande d'appliques présentant un contour triangulaire. Après une étape d'usinage des appliques pour donner un certain relief à la surface supérieure, notamment des facettes, ce document propose de détourer partiellement au laser les appliques en conservant un agencement en bande. De fait, concrètement, il est prévu de découper au laser tout le contour des appliques en ne conservant qu'un ou quelques point(s) d'attache (pont très étroit ayant une largeur entre 0.01 et 0.02 mm) reliant encore les appliques découpées à la bande pour faciliter le transport de ces appliques jusqu'au lieu dans lequel elles sont détachées manuellement de la bande et agencées en surface de cadrans. L'usinage au laser présente l'avantage de pouvoir effectuer le découpage des appliques à un stade final de leur fabrication, ce qui permet de réaliser des étapes de finition avant un tel découpage au laser et donc sur l'ensemble des appliques encore reliées à la bande considérée.

Bien que le document CH 711 256 A2 se soit donné comme but de proposer un procédé permettant de fabriquer des composants horlogers de grande qualité plus rapidement en limitant les opérations manuelles, il s'avère que dans le cas d'appliques présentant un contour relativement long, notamment dans le cas de chiffres arabes ou de chiffres romains indiqués à titre d'exemples dans ce document, l'étape de découpage au laser demande relativement beaucoup de temps, ce qui rend alors cette étape relativement onéreuse et augmente ainsi le coût de fabrication de telles appliques.

Ainsi, le choix laissé à l'homme du métier par l'art antérieur entre un découpage au laser des appliques (en conservant avantageusement au moins un faible point d'attache permettant de séparer aisément au final les appliques de la bande qui les porte) et un découpage par étampage conduit à devoir choisir, pour les appliques, entre un coût de fabrication relativement élevé et des formes relativement simples, notamment un contour de chaque applique sans au moins un creux présentant une zone pointue avec un très petit arc de cercle terminal, ayant donc un très petit rayon, ou/et une fine gorge et sans une partie saillante présentant une zone pointue, avec un très petit arc de cercle terminal ou sans arrondi terminal, ou/et une portion effilée.

### Résumé de l'invention

La présente invention a pour objectif de proposer un procédé de découpage d'appliques pour le domaine horloger qui ne présente ni les inconvénients susmentionnés de la technique d'étampage, à savoir les limitations de forme pour les appliques, ni le coût élevé lié à la technique de découpage au laser telle que proposée dans l'art antérieur.

A cet effet, l'invention concerne un procédé de découpage d'une applique destinée à un cadran de montre et présentant, au terme du procédé de découpage, un contour qui définit au moins un creux présentant une zone pointue ou/et une fine gorge ou/et qui définit au moins une partie saillante formant une pointe ou/et une portion effilée. Selon l'invention, le procédé de découpage comprend, d'une part, une étape de découpage au faisceau laser d'une première partie du contour définissant la zone pointue ou/et la fine gorge d'au moins un premier creux, parmi ledit au moins un creux, ou/et la pointe ou/et la portion effilée d'au moins une première partie saillante, parmi ladite au moins une partie saillante, et, d'autre part, une étape de découpage au moyen d'une étampe, à savoir par étampage, d'une deuxième partie du contour qui est complémentaire à la première partie.

Par 'zone pointue', on comprend une zone d'un creux (donc d'un vide) qui se termine en pointe (tout en présentant en général un petit arrondi terminal). Par 'fine gorge', on comprend une zone d'un creux où la distance entre deux parois latérales qui forment la fine gorge est relativement faible, en particulier sensiblement égale à ou plus petite que la hauteur moyenne de ces parois latérales sur la zone considérée. De même, par 'portion effilée' d'une partie saillante, on comprend une portion de cette partie saillante plus longue que large et dont la largeur est relativement faible, en particulier sensiblement égale à ou plus petite que l'épaisseur moyenne de cette portion.

Selon une variante de mise en œuvre préférée, les points de jonction entre la première partie et la deuxième partie du contour de l'applique sont chacun situés à un sommet d'une partie de l'applique formant un angle sortant.

Selon un mode de réalisation principal, le contour dans ladite zone pointue du premier creux se termine par une première ligne de jonction reliant deux segments de droite de ce contour qui convergent, cette première ligne de jonction ayant deux points d'extrémité, définissant deux points terminaux des deux segments de droite. Dans une variante générale, les deux segments de droite sont séparés par une distance sensiblement égale ou inférieure à une hauteur, notamment la hauteur maximale, d'une paroi latérale de l'applique aux deux points d'extrémité.

Selon une variante avantageuse, la distance séparant les deux points d'extrémité de la première ligne de jonction est inférieure au deux tiers de la hauteur susmentionnée. En particulier, la première ligne de jonction est une ligne courbe définissant un rayon moyen qui est sensiblement égal ou inférieur au tiers de ladite hauteur. Selon une variante préférée, la distance séparant les deux points d'extrémité de la première ligne de jonction est sensiblement égale ou inférieure à la moitié de la hauteur susmentionnée. En particulier, la première ligne de jonction est une ligne courbe définissant un rayon moyen qui est sensiblement égal ou inférieur au quart de ladite hauteur.

Ainsi, la technologie hybride de découpage selon l'invention permet d'obtenir des appliques ayant, au terme du procédé de découpage, un contour qui définit au moins un creux présentant une zone pointue ou/et une fine gorge ou/et qui définit au moins une partie saillante formant une pointe ou/et une portion effilée avec des configurations et notamment des dimensions qu'un découpage seulement par étampage ne permet pas d'obtenir, tout en limitant le coût du découpage des appliques relativement au coût qui résulterait d'un découpage entièrement au moyen d'un faisceau laser, éventuellement à l'exception de points d'attache.

### Brève description des figures

L'invention sera décrite ci-après de manière plus détaillée à l'aide des dessins annexés, donnés à titre d'exemples nullement limitatifs, dans lesquels :
- la Figure 1 montre une première étape d'une première variante d'un premier mode de mise en œuvre du procédé de découpage d'une applique selon l'invention ;
- la Figure 2 représente une deuxième étape du procédé de découpage selon la première variante susmentionnée ;
- la Figure 3 montre une applique résultant du procédé de découpage selon la première variante susmentionnée ;
- la Figure 4 est agrandissement partiel de la Figure 3 ;
- la Figure 5 montre une première étape d'une deuxième variante du premier mode de mise en œuvre du procédé de découpage d'une applique selon l'invention ;
- la Figure 6 représente une deuxième étape du procédé de découpage selon la deuxième variante susmentionnée ;
- la Figure 7 montre une applique résultant du procédé de découpage selon la deuxième variante susmentionnée ;
- la Figure 8 montre une première étape d'un deuxième mode de mise en œuvre du procédé de découpage d'une applique selon l'invention ;
- la Figure 9 représente une deuxième étape du procédé de découpage selon le deuxième mode de mise en œuvre ;
- la Figure 10 montre une applique résultant du procédé de découpage selon le deuxième mode de mise en œuvre.

### Description détaillée de l'invention

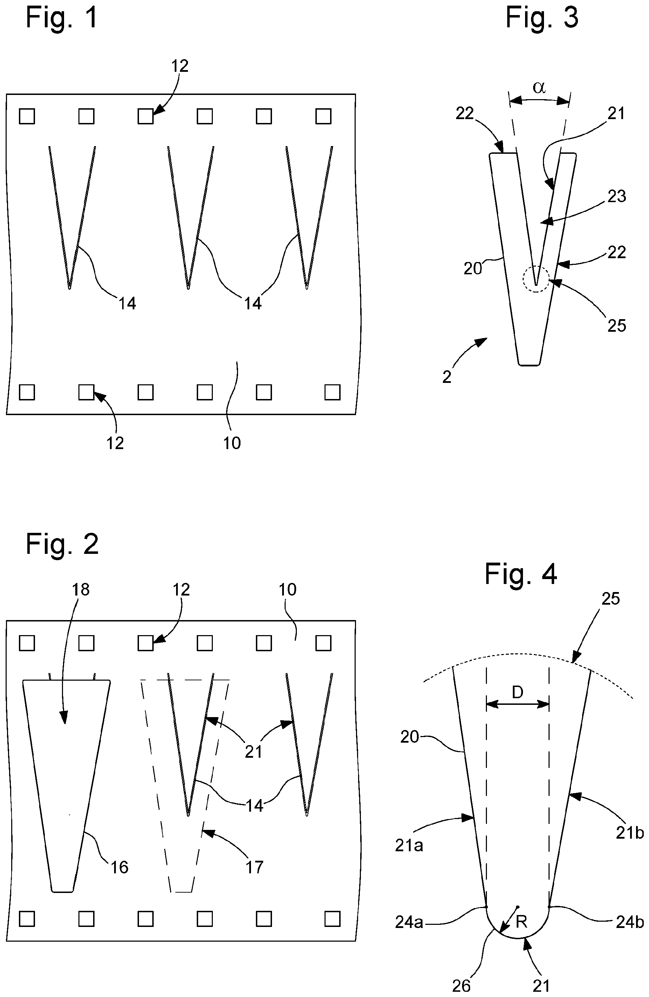

En référence aux figures 1 à 7, on décrira deux variantes d'un premier mode de mise en œuvre du procédé de découpage d'une applique selon l'invention, destinée à un cadran de montre.

De manière générale, dans le cadre du premier mode de mise en œuvre du procédé de découpage selon l'invention, l'applique 2 et l'applique 4 ont, au terme du procédé de découpage, un contour 20, respectivement 30 qui définit au moins un creux 23, respectivement 33a, 33b présentant une zone pointue 25, respectivement 25A, 25B ou/et une fine gorge (variante non représentée aux figures). Le procédé de découpage comprend, d'une part, une étape de découpage au faisceau laser d'une première partie 21, respectivement 31a et 31b dudit contour définissant au moins ladite zone pointue ou/et ladite fine gorge d'au moins un premier creux 23, respectivement 33a, parmi ledit au moins un creux, et, d'autre part, une étape de découpage au moyen d'une étampe, à savoir par étampage, d'une deuxième partie 22, respectivement 32 dudit contour qui est complémentaire à la première partie.

On décrira en détails une première variante du premier mode de mise en œuvre en référence aux Figures 1 à 4. L'applique 2 définit le chiffre romain V. La première partie du contour 20 de cette applique est constituée par le seul creux 23 qui est défini par le contour intérieur 21 de l'applique. En particulier, ce contour intérieur est formé par deux segments droits intérieurs 21a & 21b du contour 20 de l'applique et une ligne de jonction 26 qui relie ces deux segments droits intérieurs dans la zone pointue 25 du creux 23. Ainsi, le contour 20, dans la zone pointue 25 dudit creux 23 se termine par une ligne de jonction 26 reliant deux segments de droite 21a & 21b qui convergent, cette ligne de jonction 26 ayant deux points d'extrémité 24a & 24b, définissant deux points terminaux des deux segments de droite. Dans une variante générale, les deux points d'extrémité 24a & 24b sont séparés par une distance D sensiblement égale ou inférieure à une hauteur d'une paroi latérale de l'applique 2 à ces deux points d'extrémité. En règle générale, la distance D étant très petite, la hauteur de la paroi latérale est sensiblement identique aux deux points d'extrémité 24a & 24b. Si tel n'était pas le cas, on considérera la hauteur maximale pour la limite supérieure de la distance D.

Dans le domaine de l'étampage, une règle générale pour la réalisation d'appliques indique un rapport minimal de '1' pour le rapport entre la largeur d'un creux ou d'une partie saillante et la hauteur de la paroi latérale des appliques aux deux points du contour définissant la largeur considérée, que ce soit pour une fine gorge ou pour une distance entre deux points terminaux de deux segments de droite convergents dans une zone pointue d'un creux ou pour la largeur d'une portion effilée, se terminant en pointe ou non, dans le cas d'une partie saillante. Avec certaines techniques d'usinage des étampes, il est possible de diminuer un peu ce rapport, notamment avec une limite inférieure égale à 2/3. Mais de telles étampes sont plus difficiles à réaliser et sont très fragiles, limitant notamment leur durée d'utilisation. De plus, en s'approchant de la limite inférieure pour le rapport susmentionné, le nombre d'appliques devant être écartées après étampage pour cause de malformation augmente, ce qui réduit donc le rendement industriel. Le procédé de découpage selon l'invention résout efficacement ce problème technique car il limite les coûts additionnels de découpage des appliques, en proposant une technologie hybride avec une première partie du contour de chaque applique découpée à l'aide d'un faisceau laser, cette première partie du contour concernant avant tout les parties ou zones délicates où la largeur de creux ou de parties saillantes est prévue petite, voire très petite. Par contre, la deuxième partie du contour, qui ne présente pas de telles parties ou zones délicates, est découpée par étampage, c'est-à-dire au moyen d'une étampe. L'étampage présente l'avantage d'un temps de découpage relativement court, puisque l'ensemble du contour découpé par l'étampe est opéré au même instant, alors que le temps de découpage au laser dépend directement de la longueur du contour à découper.

La technologie hybride selon l'invention permet d'associer les avantages des deux techniques de découpage d'appliques connues, à savoir de l'étampage et du découpage laser. Grâce au procédé de découpage d'une applique selon invention, on peut notamment obtenir des creux présentant une zone pointue avec un arrondi terminal ayant un très petit rayon ou des parties saillantes formant chacune une pointe très aiguisée, ce qui est rendu possible grâce au découpage par faisceau laser. On cherchera à limiter la longueur du contour de l'applique qui est découpée au laser, pour diminuer le coût du découpage. Toutefois, comme ceci ressort des variantes décrites du procédé de découpage selon l'invention, on sélectionnera de préférence la première partie du contour découpée par laser de manière que les points de jonction entre cette première partie et la seconde partie complémentaire du contour découpée par étampage correspondent respectivement aux sommets d'angles sortants du contour de l'applique. Ceci permet d'éviter des problèmes de tolérances et notamment de jonctions non précises entre deux segments du contour de l'applique qui seraient découpés successivement et respectivement au laser et par une étampe sans présenter entre eux un angle sortant. Un découpage non précis aux points de jonction entre la première partie du contour, découpée au laser, et la deuxième partie complémentaire de ce contour, découpée par étampage, engendrerait une diminution de la qualité des appliques produites ou nécessiterait, pour éviter un tel phénomène, une étape de finition délicate et coûteuse.

La Figure 1 montre une bande 10 présentant des perforations de positionnement 12 et de fines fentes 14, en forme de V, obtenues par un découpage au faisceau laser (découpage laser) suite à une première étape du procédé de découpage dans laquelle ces fines fentes sont réalisées. Ces fines fentes 14 définissent extérieurement le contour intérieur 21 des appliques 2 en fabrication. La Figure 2 illustre une deuxième étape du procédé de découpage dans laquelle une forme trapézoïdale, définie par la ligne de découpage 16, est découpée au moyen d'une étampe relativement simple, puisque la forme trapézoïdale est une forme ne présentant pas de difficulté particulière pour une étampe. Chaque applique 2 est découpée successivement par un actionnement de l'étampe, en avançant par pas précis la bande 10 de sorte que le contour 17 de la partie mâle de l'étampe et par principe de sa partie femelle soient positionnées correctement par rapport à la fente correspondante 15 déjà usinée au laser pour obtenir le contour externe 22 tel que voulu pour chaque applique 2 fabriquée. Après le découpage par étampage de l'applique, il reste, d'une part, une ouverture 18 dans la bande 10 et, d'autre part, une applique 2, représentée à la Figure 3, et un déchet triangulaire.

Selon une caractéristique particulière de l'applique 2 obtenue par le premier mode de mise en œuvre du procédé de découpage selon l'invention, les deux segments droits intérieurs 21a & 21b présentent un décalage angulaire α, c'est-à-dire une ouverture angulaire, dont la valeur est sensiblement égale ou inférieure à 20°, et dans une variante spécifique inférieure à 15°.

Dans une variante avantageuse, la distance D séparant les deux points d'extrémité 24a & 24b de la ligne de jonction 26 est inférieure aux deux tiers de la hauteur de la paroi latérale de l'applique 2 à ces deux points d'extrémité. Dans une variante particulière, la ligne de jonction 26 est une ligne courbe définissant un rayon moyen qui est sensiblement égal ou inférieur au tiers de ladite hauteur, notamment inférieur à 0.06 mm. Dans une variante spécifique, la ligne courbe est un arc de cercle ayant un rayon donné.

Dans une variante préférée, la distance D séparant les deux points d'extrémité 24a & 24b de la ligne de jonction 26 est sensiblement égale ou inférieure à la moitié de la hauteur de la paroi latérale de l'applique 2 à ces deux points d'extrémité. Dans une variante particulière, la ligne de jonction 26 est une ligne courbe définissant un rayon moyen qui est sensiblement égal ou inférieur au quart de ladite hauteur, notamment inférieur à 0.04 mm. Dans une variante spécifique, la ligne courbe est un arc de cercle ayant un rayon constant, notamment inférieur à 0.04 mm. A titre d'exemple, la hauteur de la paroi latérale de l'applique, suite au découpage de son contour 20, est comprise entre 0.25 et 0.35 mm alors que le rayon de l'arc de cercle, formant la ligne de jonction 26, est compris entre 0.025 et 0.035 mm. On a donc un rapport de 1/10 entre le rayon de la ligne de jonction 26 et la hauteur de la paroi latérale de l'applique dans la zone pointue 25 du creux 23, en particulier aux deux points d'extrémité 24a & 24b de cette ligne de jonction. Ceci est rendu possible par la technologie de découpage au laser dans une bande métallique 10 ayant l'épaisseur prévue pour les appliques après leur découpage, épaisseur qui est généralement ensuite diminuée un peu par des étapes de finition, notamment par la réalisation d'une surface supérieure polie ou de facettes supérieures brillantes obtenues par un outil muni d'un diamant.

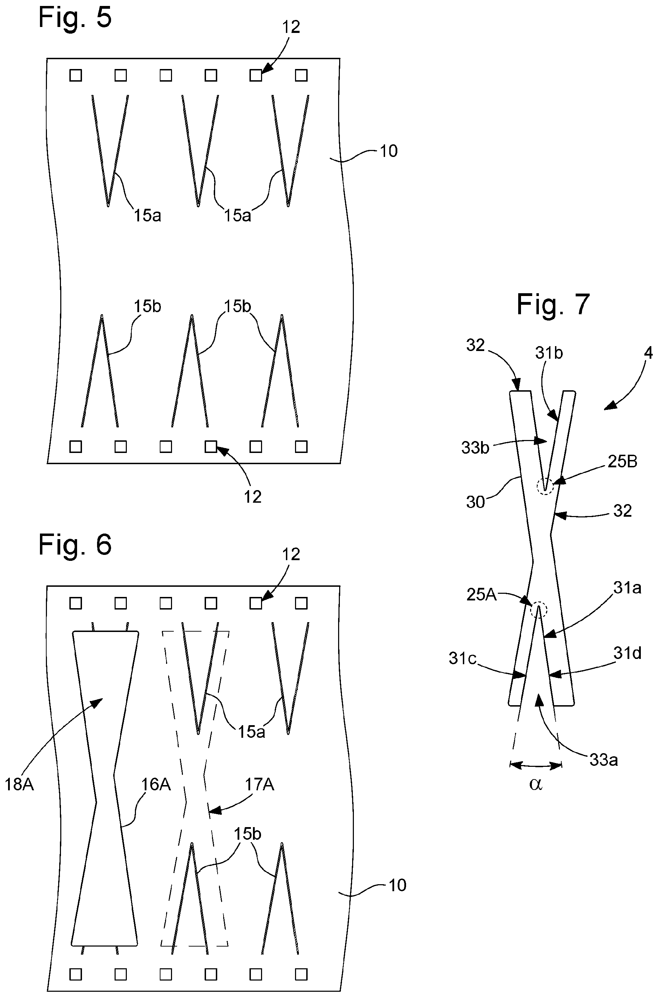

On décrira ci-après une deuxième variante du premier mode de mise en œuvre en référence aux Figures 5 à 7. Dans cette deuxième variante, l'applique 4 définit le chiffre romain X. La première partie du contour 30 de cette applique est constituée par deux creux, soit un creux inférieur 33a et un creux supérieur 33b qui sont définis chacun par un contour intérieur 31a, respectivement 31b de l'applique 4. En particulier, comme dans le cas de la première variante concernant l'applique en V, le contour intérieur 31a du creux inférieur 33a est formé par deux segments droits 31c & 31d et une ligne de jonction, semblable à la ligne de jonction 26 représentée à la Figure 4, qui relie ces deux segments droits dans la zone pointue 25A du creux 33a. Il en va de même pour le creux supérieur 33b qui est semblable au creux inférieur 33a. Ainsi, ce qui a été exposé en lien avec la première variante s'applique également pour la deuxième variante en lien avec l'applique en X, pour ce qui concerne le creux inférieur 33a et aussi le creux supérieur 33b.

Plus précisément, l'applique 4 définit quatre creux, la première partie du contour 30 de cette applique étant constituée par les deux creux présentant une zone pointue définissant un angle aigu, soit le creux inférieur 33a, qui définit un premier creux, et le creux supérieur 33b qui définit un deuxième creux présentant aussi une zone pointue. Comme pour le premier creux, le contour dans la zone pointue 25B du deuxième creux 33b se termine par une deuxième ligne de jonction reliant deux segments droits de ce contour qui convergent et définissent le deuxième creux. Cette deuxième ligne de jonction a deux points d'extrémité qui sont séparés par une distance sensiblement égale ou inférieure à une hauteur d'une paroi latérale de l'applique aux deux points d'extrémité de la deuxième ligne de jonction. La deuxième partie 32 du contour 30 est formée par la partie complémentaire à la première partie. Cette deuxième partie du contour est constituée par les segments du contour 30 définissant les deux creux latéraux, lesquels présentent chacun à leur fond un angle obtus, et par les quatre lignes de ce contour définies par les extrémités des quatre bras de l'applique en X.

La Figure 5 montre une bande 10 présentant des perforations de positionnement 12 et de fines fentes 15a et 15b, chacune en forme de V, obtenues par un découpage laser suite à une première étape du procédé de découpage dans laquelle ces fines fentes sont réalisées. Ces fines fentes 15a et 15b définissent respectivement les contours intérieurs 31a et 31b des appliques 4 en fabrication. La Figure 6 illustre une deuxième étape du procédé de découpage dans laquelle une enveloppe extérieure, définie par la ligne de découpage 16A, est découpée au moyen d'une étampe présentant une telle forme. Chaque applique 4 est découpée successivement par un actionnement de l'étampe, en avançant par pas précis la bande 10 de sorte que le contour 17A de la partie mâle de l'étampe et de sa partie femelle soient bien positionnées relativement aux deux fentes correspondantes 15a & 15b déjà usinées au laser pour obtenir le contour externe 32 tel que voulu pour chaque applique 4 fabriquée. Après le découpage par étampage de l'applique 4, il reste, d'une part, une ouverture 18A dans la bande 10 et, d'autre part, une applique 4, représentée à la Figure 7, et deux parties triangulaires qui sont des déchets de production.

Selon une caractéristique particulière de l'applique 4 obtenue par le premier mode de mise en œuvre du procédé de découpage selon l'invention, les deux segments droits intérieurs 31c & 31d présentent un décalage angulaire α dont la valeur est inférieure à 30°, et dans une variante spécifique sensiblement égale ou inférieure à 20°.

Comme exposé précédemment, dans une variante avantageuse, la distance séparant les deux points d'extrémité de la deuxième ligne de jonction est inférieure aux deux tiers de la hauteur de la paroi latérale de l'applique à ces deux points d'extrémité. Selon une caractéristique spécifique, la deuxième ligne de jonction est une ligne courbe qui définit un rayon moyen qui est sensiblement égal ou inférieur au tiers de la hauteur de la paroi latérale de l'applique aux deux points d'extrémité de la deuxième ligne de jonction. En particulier, le rayon moyen de la deuxième ligne de jonction est inférieur à 0.06 mm.

Dans une variante préférée, la distance séparant les deux points d'extrémité de la deuxième ligne de jonction est sensiblement égale ou inférieure à la moitié de la hauteur de la paroi latérale de l'applique à ces deux points d'extrémité. En particulier, la deuxième ligne de jonction est une ligne courbe définissant un rayon moyen qui est sensiblement égal ou inférieur au quart de la hauteur de la paroi latérale de l'applique aux deux points d'extrémité de la deuxième ligne de jonction. Dans une variante spécifique, la deuxième ligne de jonction est un arc de cercle dont le rayon est égal ou inférieur à 0.04 mm.

On décrira encore ci-après un deuxième mode de mise en œuvre du procédé de découpage d'une applique selon l'invention. L'applique présente, au terme du procédé de découpage selon ce deuxième mode de mise en œuvre, un contour qui définit au moins une partie saillante formant une pointe ou/et une portion effilée. De manière générale, le procédé de découpage comprend une étape de découpage au faisceau laser d'une première partie dudit contour définissant ladite pointe ou/et ladite portion effilée d'au moins une première partie saillante, parmi ladite au moins une partie saillante, et une étape de découpage au moyen d'une étampe d'une deuxième partie dudit contour qui est complémentaire à la première partie.

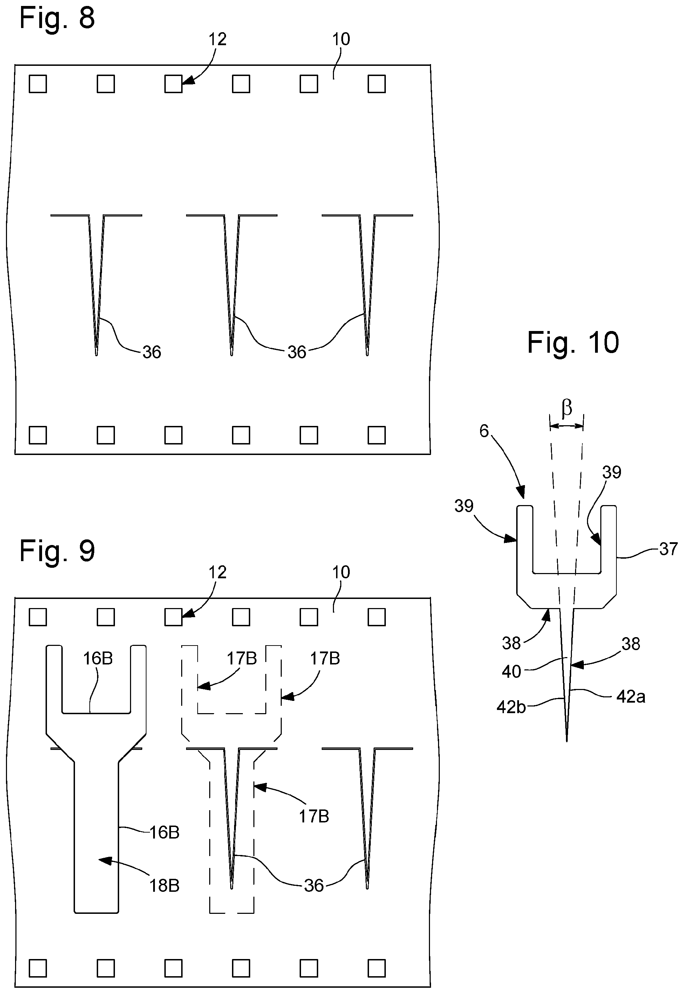

Dans la variante représentée aux Figures 8 à 10, l'applique 6 présente, au terme du procédé de découpage, un contour 37 qui définit au moins une partie saillante 40 formant une pointe. La première partie 38 du contour 37, découpée au laser, comprend deux segments droits 42a & 42b définissant la pointe 40 et deux autres segments droits situés respectivement des deux côtés de la base de la pointe et formant respectivement avec les deux segments droits 42a & 42b deux angles rentrants. Les deux segments droits 42a & 42b du contour de la pointe ont un décalage angulaire / une ouverture angulaire β. Dans une variante particulière, la valeur de l'angle β est sensiblement égale ou inférieure à 20°, et dans une variante spécifique inférieur à 15°. La deuxième partie 39 du contour 37 est complémentaire à la première partie 38, c'est-à-dire que les première et deuxième parties 38 & 39 constitue ensemble l'entier du contour 37 de l'applique 6.

La Figure 8 montre une bande 10 présentant des perforations de positionnement 12 et de fines fentes 36 obtenues par un découpage au faisceau laser (découpage laser) suite à une première étape du procédé de découpage dans laquelle ces fines fentes sont réalisées. Ces fines fentes 36 définissent la première partie 38 du contour 37 des appliques 6 en fabrication. La Figure 9 illustre une deuxième étape du procédé de découpage dans laquelle une forme, définie par la ligne de découpage 16B, correspond supérieurement à celle définie par la deuxième partie 39 du contour 37 de chaque applique 6. La ligne de découpage 16B forme inférieurement un bras relativement large dont le positionnement est tel que ce bras est superposé à la pointe 40 obtenue par découpage laser et recouvre entièrement cette pointe. La pièce définie par la ligne de découpage 16B est découpée au moyen d'une étampe relativement simple, puisque sa forme est relativement simple et ne présente pas de difficulté particulière pour une étampe. Comme dans le premier mode de mise en œuvre décrits aux Figures 2 et 6, les deux extrémités de la fine fente 36 usinée au laser vont un peu au-delà de la première partie 38 du contour 37 prévu pour l'applique 6, les portions supplémentaires de la fine fente 36 à ses deux extrémités relativement à la première partie 38 du contour 37 sont prévues à l'extérieur de l'applique en fabrication et demeurent donc dans la bande 10 une fois l'applique découpée entièrement. C'est notamment pour cette raison que les deux segments droits qui s'étendent transversalement à la direction longitudinale de la pointe des deux côtés de sa base sont découpés au laser comme les deux segments droits de la pointe 40 avec lesquels ils forment deux angles rentrants.

Comme dans le premier mode de mise en œuvre du procédé de découpage, chaque applique 6 est découpée successivement par un actionnement de l'étampe, en avançant par pas précis la bande 10 de sorte que le contour 17B de la partie mâle de l'étampe et sa partie femelle soient positionnées correctement par rapport à la fente correspondante 36 déjà usinée au laser pour obtenir le contour externe 32 tel que voulu pour chaque applique 6 fabriquée. Après le découpage par étampage de l'applique, il reste, d'une part, une ouverture 18B dans la bande 10 et, d'autre part, une applique 6, représentée à la Figure 10, et un déchet ayant une forme en U.

## Revendications

1. Procédé de découpage d'une applique (2, 4, 6) destinée à un cadran de montre, cette applique ayant, au terme du procédé de découpage, un contour (20, 30, 37) qui définit au moins un creux (23, 33a, 33b) présentant une zone pointue (25, 25A, 25B) ou/et une fine gorge ou/et qui définit au moins une partie saillante formant une pointe (40) ou/et une portion effilée ; **caractérisé en ce que** le procédé de découpage comprend une étape de découpage au faisceau laser d'une première partie (21, 31a, 31b, 38) dudit contour définissant ladite zone pointue ou/et ladite fine gorge d'au moins un premier creux (23, 33a), parmi ledit au moins un creux, ou/et ladite pointe (40) ou/et ladite portion effilée d'au moins une première partie saillante, parmi ladite au moins une partie saillante, et une étape de découpage au moyen d'une étampe d'une deuxième partie (22, 32, 39) dudit contour qui est complémentaire à la première partie.

2. Procédé de découpage selon la revendication 1, **caractérisé en ce que** ledit contour dans ladite zone pointue dudit premier creux se termine par une première ligne de jonction (26) reliant deux segments de droite (21a, 21b ; 31c, 31d) de ce contour qui convergent, cette première ligne de jonction ayant deux points d'extrémité (24a, 24b), définissant deux points terminaux des deux segments de droite, qui sont séparés par une distance (D) sensiblement égale ou inférieure à une hauteur d'une paroi latérale de l'applique aux deux points d'extrémité.

3. Procédé de découpage selon la revendication 2, **caractérisé en ce que** ladite distance séparant les deux points d'extrémité de la première ligne de jonction est inférieure aux deux tiers de ladite hauteur.

4. Procédé de découpage selon la revendication 3, **caractérisé en ce que** ladite première ligne de jonction (26) est une ligne courbe définissant un rayon moyen (R) qui est inférieur au tiers de ladite hauteur.

5. Procédé de découpage selon la revendication 4, **caractérisé en ce que** ledit rayon moyen est inférieur à 0.06 mm.

6. Procédé de découpage selon la revendication 2, **caractérisé en ce que** ladite distance séparant les deux points d'extrémité de la première ligne de jonction (26) est sensiblement égale ou inférieure à la moitié de ladite hauteur.

7. Procédé de découpage selon la revendication 6, **caractérisé en ce que** la première ligne de jonction est une ligne courbe définissant un rayon moyen qui est sensiblement égal ou inférieur au quart de ladite hauteur.

8. Procédé de découpage selon la revendication 7, **caractérisé en ce que** ledit rayon moyen est égal ou inférieur à 0.04 mm.

9. Procédé de découpage selon une quelconque des revendications précédentes, **caractérisé en ce que** les points de jonction entre la première partie et la deuxième partie du contour de l'applique sont tous situés à un sommet d'une partie de l'applique formant un angle sortant.

10. Procédé de découpage selon la revendication 9, **caractérisé en ce que** l'applique (2) définit le chiffre romain V, ladite première partie du contour de cette applique étant constituée par le premier creux qui est défini par le contour intérieur de l'applique formé par deux segments droits intérieurs du contour de l'applique et la première ligne de jonction qui relie ces deux segments droits intérieurs.

11. Procédé de découpage selon la revendication 10, **caractérisé en ce que** les deux segments droits intérieurs présentent un décalage angulaire dont la valeur est inférieure à 20°.

12. Procédé de découpage selon la revendication 9, **caractérisé en ce que** l'applique (4) définit le chiffre romain X, le contour de cette applique définissant ainsi quatre creux, ladite première partie du contour de l'applique étant constituée par le creux inférieur, qui définit ledit premier creux, et par le creux supérieur qui définit un deuxième creux parmi ledit au moins un creux, le contour dans la zone pointue du deuxième creux se terminant par une deuxième ligne de jonction reliant deux segments droits de ce contour qui convergent et définissent le deuxième creux, cette deuxième ligne de jonction ayant deux points d'extrémité qui sont séparés par une distance sensiblement égale ou inférieure à une hauteur d'une paroi latérale de l'applique aux deux points d'extrémité de la deuxième ligne de jonction.

13. Procédé de découpage selon la revendication 12, **caractérisé en ce que** les deux segments droits définissant le deuxième creux présentent un décalage angulaire dont la valeur est inférieure à 30°.

14. Procédé de découpage selon la revendication 12 ou 13, **caractérisé en ce que** ladite distance séparant les deux points d'extrémité de la deuxième ligne de jonction est inférieure aux deux tiers de ladite hauteur de la paroi latérale de l'applique à ces deux points d'extrémité.

15. Procédé de découpage selon la revendication 14, **caractérisé en ce que** la deuxième ligne de jonction est une ligne courbe définissant un rayon moyen qui est inférieur au tiers de la hauteur de la paroi latérale de l'applique aux deux points d'extrémité de la deuxième ligne de jonction.

16. Procédé de découpage selon la revendication 12 ou 13, **caractérisé en ce que** la distance séparant les deux points d'extrémité de la deuxième ligne de jonction est sensiblement égale ou inférieure à la moitié de la hauteur de la paroi latérale de l'applique à ces deux points d'extrémité.

17. Procédé de découpage selon la revendication 16, **caractérisé en ce que** la deuxième ligne de jonction est une ligne courbe définissant un rayon moyen qui est sensiblement égal ou inférieur au quart de la hauteur de la paroi latérale de l'applique aux deux points d'extrémité de la deuxième ligne de jonction.

## Patentansprüche

1. Verfahren zum Ausschneiden einer für ein Uhrenzifferblatt bestimmten Applike (2, 4, 6), wobei diese Applike nach Abschluss des Ausschneideverfahrens eine Kontur (20, 30, 37) aufweist, die mindestens eine Vertiefung (23, 33a, 33b) mit einem spitz zulaufenden Bereich (25, 25A, 25B) und/oder einer feinen Nut definiert und/oder mindestens einen vorspringenden Abschnitt definiert, der eine Spitze (40) bildet und/oder einen verjüngten Abschnitt; **dadurch gekennzeichnet, dass** das Ausschneideverfahren einen Schritt des Laserschneidens eines ersten Abschnitts (21, 31a, 31b, 38) der genannten Kontur umfasst, der den genannten spitz zulaufenden Bereich und/oder die genannte feine Nut von mindestens einer ersten Vertiefung (23, 33a), unter den genannten mindestens einen Vertiefungen, definiert und/oder die genannte Spitze (40) und/oder den genannten verjüngten Abschnitt von mindestens einem ersten vorspringenden Abschnitt, unter den genannten mindestens einen vorspringenden Abschnitten, sowie einen Schritt des Schneidens mittels einer Stanze eines zweiten Abschnitts (22, 32, 39) der genannten Kontur umfasst, der zu dem ersten Abschnitt komplementär ausgebildet ist.

2. Ausschneideverfahren nach Anspruch 1, **dadurch gekennzeichnet, dass** die genannte Kontur im genannten spitz zulaufenden Bereich der genannten ersten Vertiefung in einer ersten Verbindungslinie (26) endet, die zwei konvergierende Geradenabschnitte (21a, 21b; 31c, 31d) dieser Kontur miteinander verbindet, wobei diese erste Verbindungslinie zwei Endpunkte (24a, 24b) aufweist, die die Endpunkte der beiden Geradenabschnitte definieren und durch einen Abstand (D) voneinander getrennt sind, der im Wesentlichen gleich oder geringer ist als eine Höhe einer Seitenwand der Applike an den beiden Endpunkten.

3. Ausschneideverfahren nach Anspruch 2, **dadurch gekennzeichnet, dass** der genannte Abstand zwischen den beiden Endpunkten der ersten Verbindungslinie kleiner als zwei Drittel der genannten Höhe ist.

4. Ausschneideverfahren nach Anspruch 3, **dadurch gekennzeichnet, dass** die genannte erste Verbindungslinie (26) eine gekrümmte Linie ist, die einen mittleren Radius (R) definiert, der kleiner als ein Drittel der genannten Höhe ist.

5. Ausschneideverfahren nach Anspruch 4, **dadurch gekennzeichnet, dass** der genannte mittlere Radius kleiner als 0,06 mm ist.

6. Ausschneideverfahren nach Anspruch 2, **dadurch gekennzeichnet, dass** der genannte Abstand zwischen den beiden Endpunkten der ersten Verbindungslinie (26) im Wesentlichen gleich oder kleiner als die Hälfte der genannten Höhe ist.

7. Ausschneideverfahren nach Anspruch 6, **dadurch gekennzeichnet, dass** die erste Verbindungslinie eine gekrümmte Linie ist, die einen mittleren Radius definiert, der im Wesentlichen gleich oder kleiner als ein Viertel der genannten Höhe ist.

8. Ausschneideverfahren nach Anspruch 7, **dadurch gekennzeichnet, dass** der genannte mittlere Radius gleich oder kleiner als 0,04 mm ist.

9. Ausschneideverfahren nach einem der vorhergehenden Ansprüche, **dadurch gekennzeichnet, dass** die Verbindungsstellen zwischen dem ersten Abschnitt und dem zweiten Abschnitt der Kontur der Applike sämtlich an einem Scheitelpunkt eines Abschnitts der Applike angeordnet sind, der einen Außenwinkel bildet.

10. Ausschneideverfahren nach Anspruch 9, **dadurch gekennzeichnet, dass** die Applike (2) die römische Zahl V bildet, wobei der genannte erste Abschnitt der Kontur dieser Applike durch die erste Vertiefung gebildet ist, die von der Innenkontur der Applike definiert wird, welche aus zwei inneren Geradenabschnitten der Kontur der Applike und der ersten Verbindungslinie besteht, die diese beiden inneren Geradenabschnitte miteinander verbindet.

11. Ausschneideverfahren nach Anspruch 10, **dadurch gekennzeichnet, dass** die beiden inneren Geradenabschnitte einen Winkelversatz aufweisen, dessen Wert kleiner als 20° ist.

12. Ausschneideverfahren nach Anspruch 9, **dadurch gekennzeichnet, dass** die Applike (4) die römische Zahl X bildet, wobei die Kontur dieser Applike somit vier Vertiefungen definiert, wobei der genannte erste Abschnitt der Kontur der Applike durch die untere Vertiefung, die die genannte erste Vertiefung definiert, und durch die obere Vertiefung, die eine zweite Vertiefung unter den genannten mindestens einen Vertiefungen definiert, gebildet ist; wobei die Kontur im spitz zulaufenden Bereich der zweiten Vertiefung in einer zweiten Verbindungslinie endet, die zwei konvergierende Geradenabschnitte dieser Kontur miteinander verbindet und die zweite Vertiefung definiert, wobei diese zweite Verbindungslinie zwei Endpunkte aufweist, die durch einen Abstand voneinander getrennt sind, der im Wesentlichen gleich oder kleiner ist als eine Höhe einer Seitenwand der Applike an den beiden Endpunkten der zweiten Verbindungslinie.

13. Ausschneideverfahren nach Anspruch 12, **dadurch gekennzeichnet, dass** die beiden Geradenabschnitte, die die zweite Vertiefung definieren, einen Winkelversatz aufweisen, dessen Wert kleiner als 30° ist.

14. Ausschneideverfahren nach Anspruch 12 oder 13, **dadurch gekennzeichnet, dass** der genannte Abstand zwischen den beiden Endpunkten der zweiten Verbindungslinie kleiner als zwei Drittel der genannten Höhe der Seitenwand der Applike an diesen beiden Endpunkten ist.

15. Ausschneideverfahren nach Anspruch 14, **dadurch gekennzeichnet, dass** die zweite Verbindungslinie eine gekrümmte Linie ist, die einen mittleren Radius definiert, der kleiner als ein Drittel der Höhe der Seitenwand der Applike an den beiden Endpunkten der zweiten Verbindungslinie ist.

16. Ausschneideverfahren nach Anspruch 12 oder 13, **dadurch gekennzeichnet, dass** der Abstand zwischen den beiden Endpunkten der zweiten Verbindungslinie im Wesentlichen gleich oder kleiner als die Hälfte der Höhe der Seitenwand der Applike an diesen beiden Endpunkten ist.

17. Ausschneideverfahren nach Anspruch 16, **dadurch gekennzeichnet, dass** die zweite Verbindungslinie eine gekrümmte Linie ist, die einen mittleren Radius definiert, der im Wesentlichen gleich oder kleiner als ein Viertel der Höhe der Seitenwand der Applike an den beiden Endpunkten der zweiten Verbindungslinie ist.

## Claims

1. Process for blanking an applique (2, 4, 6) intended for a watch dial, this applique having, at the end of the blanking process, an outline (20, 30, 37) which defines at least one hollow (23, 33a, 33b) having a pointed zone (25, 25A, 25B) or/and a thin groove or/and which defines at least one projecting part forming a point (40) or/and a drawn-out portion; **characterised in that** the blanking method comprises a step of blanking with a laser beam a first part (21, 31a, 31b, 38) of said outline defining said pointed zone or/and said thin groove of at least a first hollow (23, 33a), from said at least one hollow, or/and said point (40) or/and said drawn-out portion of at least a first projection part, from said at least one projecting part, and a step of blanking by means of a stamp a first part (22, 32, 39) of said outline which is complementary with the first part.

2. Blanking process according to claim 1, **characterised in that** said outline in said pointed zone of said first hollow ends with a first junction line (26) connecting two line segments (21a, 21b; 31c, 31d) of this outline which converge, this first junction line having two end points (24a, 24b), defining two end points of the two line segments, which are separated by a distance (D) substantially equal to or less than a side wall of the applique at the two end points.

3. Blanking process according to claim 2, **characterised in that** said distance separating the two end points of the first junction line is less than two thirds of said height.

4. Blanking process according to claim 3, **characterised in that** said first junction line (26) is a curved line defining a mean radius (R) which is less than a third of said height.

5. Blanking process according to claim 4, **characterised in that** said mean radius is less than 0.06 mm.

6. Blanking process according to claim 2, **characterised in that** said distance separating the two end points of the first junction line (26) is less than half said height.

7. Blanking process according to claim 6, **characterised in that** the first junction line is a curved line defining a mean radius which is substantially equal to or less than a quarter of said height.

8. Blanking process according to claim 7, **characterised in that** said mean radius is equal to or less than 0.04 mm.

9. Blanking process according to any one of the preceding claims, **characterised in that** the junction points between the first part and the second part of the outline of the applique are all located at an apex of a part of the applique forming an external angle.

10. Blanking process according to claim 9, **characterised in that** the applique (2) defines the Roman numeral V, said first part of the outline of this applique consisting of the first hollow which is defined by the internal outline of the applique formed by two internal straight segments of the outline of the applique and the first junction line which connects these two internal straight segments.

11. Blanking process according to claim 10, **characterised in that** the two internal straight segments have an angular offset, the value of which is less than 20°.

12. Blanking process according to claim 9, **characterised in that** the applique (4) defines the Roman numeral X, the outline of this applique thus defining four hollows, said first part of the outline of the applique consisting of the lower hollow, which defines said first hollow, and of the upper hollow which defines a second hollow from said at least one hollow, the outline in the pointed zone of the second hollow ending with a second junction line connecting two straight segments of this outline which converge and define the second hollow, this second junction line having two end points which are separated by a distance substantially equal to or less than a height of a side wall of the applique at the two end points of the second junction line.

13. Blanking process according to claim 12, **characterised in that** the two internal straight segments defining the second hollow have an angular offset, the value of which is less than 30°.

14. Blanking process according to claim 12 or 13, **characterised in that** said distance separating the two end points of the second junction line is less than two thirds of said height of the side wall of the applique at these two end points.

15. Blanking process according to claim 14, **characterised in that** the second junction line is a curved line defining a mean radius which is less than a third of the height of the side wall of the applique at the two end points of the second junction line.

16. Blanking process according to claim 12 or 13, **characterised in that** the distance separating the two end points of the second junction line is substantially equal to or less than half the height of a side wall of the applique at these two end points.

17. Blanking process according to claim 16, **characterised in that** the second junction line is a curved line defining a mean radius which is substantially equal to or less than a quarter of the height of the side wall of the applique at the two end points of the second junction line.
